# EUROPEAN PATENT APPLICATION

(11) **EP 1 818 457 A2**
(43) Date of publication of application: **15.08.2007**
(21) Application number: 07101715.6
(22) Date of filing: 05.02.2007
(51) Int. Cl.: E01H 5/07

(54) **Apparatus for moving material**

(30) Priority: 10.02.2006 FI 20065097
(71) Applicant: Maviteknik Oy, 31640 Humppila (FI)
(72) Inventor: Virtanen, Mauno, 31640 Humppila (FI)
(74) Representative: Kaukonen, Juha Veikko

(57) **Abstract**

An apparatus for moving material. The apparatus (1) comprises a frame (2) and a blade device (7) secured to the frame and a track (3) that is configured to be an endless loop and that is arranged to make rotary motion carried by support elements secured to the frame. The rotation axis (C) of the rotary motion of the track (3) is configured perpendicular to the longitudinal axis (L) of the blade device (7) and to the main direction of use (U) of the apparatus (1). One edge of the track (3) is arranged in the vicinity of the blade device (7) and projections are arranged on the outer surface of the track (3).

## Description

### BACKGROUND OF THE INVENTION

The invention relates to an apparatus for moving material, the apparatus comprising a frame and a blade device secured to the frame.

In this description material to be moved refers to snow, ice, peat, mud, sand, grain, pellets, chips or the like material that is moved as small particles.

For instance, when snow is ploughed away from a roadway with a bulldozer blade, the snow accumulates relatively close to the roadside and forms a snowbank. With time the height of the snowbanks increases and the actual drive lane area therebetween becomes narrower, because the plough is simply not able to lift snow over the snowbank away from the road, but it has to be ploughed to the borders of the drive lane area between the snowbanks. In winters with heavy snowfalls the narrowing of the drive lane area poses a considerable problem. Up till now, attempts have been made to solve this problem by driving tracked vehicles over the snowbank to make it lower, for instance. This is slow and expensive, however.

Another problem associated with snowploughing is that the bulldozer blade must move at a given minimum speed in order for the snow to be removed from the roadway. A typical minimum speed is relatively high, for instance 30 km/h, which speed is difficult to maintain safely at every point of the roadway.

### BRIEF DESCRIPTION OF THE INVENTION

The object of the present invention is to provide a novel and improved apparatus for moving material, by which the above problems are avoided.

The apparatus of the invention is characterized in that it also comprises a track which is configured to be an endless loop and which is configured to make rotary motion in relation to the frame, carried by support elements mounted on the frame, that the rotation axis of the track's rotary motion is configured to be perpendicular to the longitudinal axis of the blade device and the main direction of use of the apparatus and that one edge of the track is configured in the vicinity of the blade device and that on the outer surface of the track there are arranged projections.

The basic idea of the invention is that the apparatus includes a track whose one edge is arranged in the vicinity of the blade device and which track is configured to make rotary motion in relation to the frame, carried by support elements mounted on the frame such that the rotation axis of the track's rotary motion is configured to be perpendicular to the longitudinal axis of the blade device and the main direction of use of the apparatus and that the track comprises projections that shift the material to be moved in the direction of the rotary motion.

The invention has an advantage that by means of the track it is possible to cast material detached by the blade device a long way from the point where the material was detached. By way of example, if snow removal from road surfaces is concerned, the snow will be moved a long way off the road, whereby no bank will be formed on the roadside.

A further advantage is that the moving distance of material is independent of the travel speed of the apparatus. Hence, it is possible to move the material far off, even though the travel speed of the apparatus would be very low or even though the apparatus would be stationary at times. The feature improves operational safety of the apparatus and makes sure that the material to be moved will be shifted from one place to another in the best possible manner.

The basic idea of one preferred embodiment of the invention is that the running direction of the track is reversible. There is an advantage that the moving direction of the material may be changed.

The basic idea of a second preferred embodiment of the invention is that a blade device is configured to be movable in relation to the frame. There is an advantage that the blade device has an excellent detaching ability and the blade device may penetrate even into hard material, such as ice or icy snow.

The basic idea of a third preferred embodiment of the invention is that the apparatus comprises at least two tracks mutually configured such that the working width of the apparatus is larger than the working width of a single track. There is an advantage that in this manner the apparatus will have a very large working width.

The basic idea of a fourth preferred embodiment of the invention is that the apparatus includes a crushing device that comprises a crusher part arranged to rotate in relation to the frame, and on an outer surface of the crusher part there are arranged crushing elements. There is an advantage that by means of the crushing device it is possible to detach and crush hard material, such as ice, to be moved by the track.

The basic idea of a fifth preferred embodiment of the invention is that the frame of the apparatus is substantially open both one the first and the second side of the apparatus. The advantage is that the apparatus may be used for moving material no matter whether the apparatus is driven the first side ahead or the second side ahead.

The basic idea of a sixth preferred embodiment of the invention is that the apparatus is mounted on the work machine such that its position may be changed in relation thereto. The advantage is that casting direction of the track may be changed according to need. In addition, adjustment makes it possible to decide at which points and in what manner movable material is removed from a snowbank, for instance.

The basic idea of a sixth preferred embodiment of the invention is that the work machine, onto which the apparatus is mounted, is a bulldozer blade and the apparatus is arranged to move further the material moved thereby. It should be noted that, apart from known bulldozer blades, the bulldozer blade also refers to snow ploughs that may be mounted on a truck or the like, for instance. The advantage is that the bulldozer blade allows the working width of the apparatus to be increased.

### BRIEF DESCRIPTION OF THE DRAWINGS

The invention will be described in greater detail in connection with the attached drawings, in which
Figure 1a is a schematic view of an apparatus according to the invention seen from its first side,
Figure 1b is schematic top view of the apparatus of Figure 1a partly cut open,
Figure 2a is a schematic view of a blade device of the apparatus according to the invention seen from the first side of the apparatus,
Figure 2b is a top view of a detail in the blade device of Figure 2a,
Figure 3 is a schematic view of a part in the apparatus according to the invention seen from the first side of the apparatus,
Figure 4a is a schematic view of an apparatus according to the invention mounted on a bulldozer blade seen from the first side thereof,
Figure 4b is a schematic perspective view of the apparatus of Figure 4a,
Figure 4c is a schematic view of the apparatus of Figure 4a seen from the first side,
Figure 5 is a schematic end view of the apparatus of the invention mounted on a bulldozer blade,
Figure 6a is a schematic view of an apparatus according to the invention arranged on a second side of a bulldozer blade,
Figure 6b is a schematic view of the apparatus of Figure 6a seen from the first side,
Figure 7a is a schematic view of an apparatus of the invention seen from the first side thereof, and
Figure 7b is a schematic top view of the apparatus of Figure 7a.

For the sake of clarity, the figures show the invention in a simplified form. Like reference numerals refer to like parts in the figures.

### DETAILED DESCRIPTION OF THE INVENTION

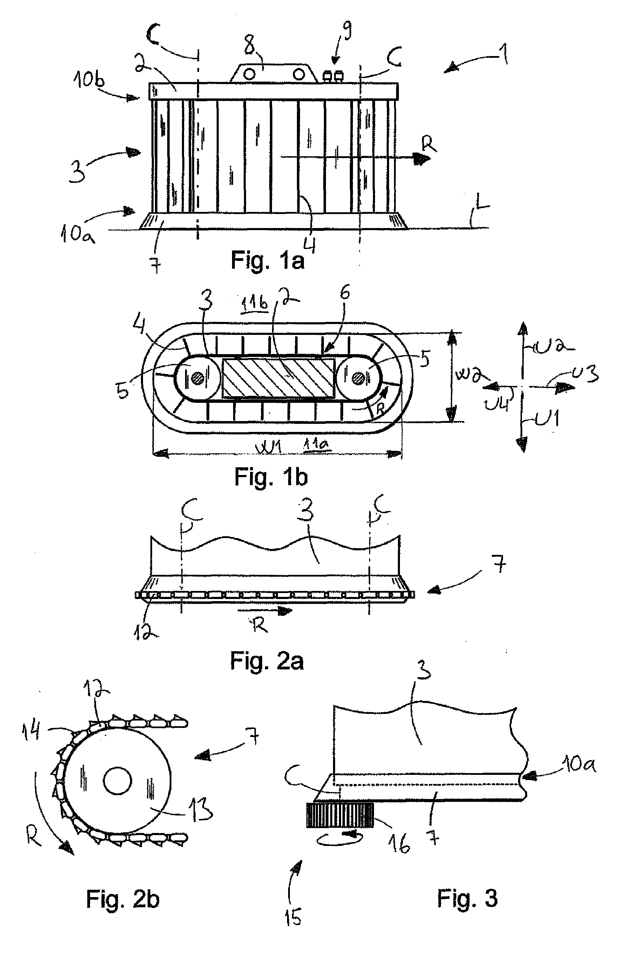

Figure 1a is a schematic front view and Figure 1b is a top view, partly cut open, of an apparatus according to the invention.

The apparatus 1 comprises a frame 2, for instance, made of steel or other metal, and a track 3. The track 3 forms an endless loop that is arranged for being carried by two track rollers 5 arranged with spacing in the frame 2. The track 5 may rotate in relation to the frame 2, driven by the track roller 5. The frame 2 is also provided with additional wheels 6 that control and support the track 3.

The track 3 may be a track of a snowmobile, for instance, or a track developed further therefrom. The track 3 may be made, for instance, of polymer material, metal or a combination thereof.

On the outer surface of the track 3 there are arranged projections 4. In the embodiment of Figures 1a to 1b, the projections 4 are ribs, which extend substantially from the first edge 10a to the second edge 10b of the track 3. The projections 4 may be an integral part of the track structure or they may be elements secured, for instance, with screws, rivets or by welding to the track itself.

The track may also consist of two or more juxtaposed chains and/or belts, to which the projections 4 have been secured. Thus, the structure of the track 3 will be very open.

The frame 2 comprises mounting means 8 for mounting the apparatus 1 detachably either directly to the work machine driving it or to another work machine, which in turn is coupled to the driving work machine. The driving work machine refers to a vehicle that is able to move the material to be moved by means of the apparatus 1. The work machine may be, for instance, a tractor, a bulldozer, a bucket loader, a forest machine or another similar machine. The mounting means 8 may be secured, for instance, in place of the bucket or the grapple of the work machine or to the lifting device of the work machine. It should be noted that the work machine does not appear in the figures.

The apparatus 1 further comprises a blade device 7 connected to the frame 2, which blade device is arranged in the vicinity of the second edge - in Figure 1 a, the first edge 10a - of the track 3. The blade device 7 is arranged such that the rotation axis C of the rotary motion of the track 3 is perpendicular to the longitudinal axis L of the blade device 7 and the main g directions of use U 1, U2 of the apparatus 1.

The blade device 7 runs uniformly throughout the whole periphery of the first edge 10a such that the apparatus includes a blade device 7 not only on the first side 11a and the second side 11b of the apparatus but also on both ends of the apparatus. In this connection it should be noted that the blade device 7 need not necessarily run around the whole apparatus as in the embodiment of Figures 1 a, 1b, but it may be left out on one side and/or one end or both ends.

The reach of the blade device 7, i.e. the distance of the cutting edge or edges of the blade from the track 3 and the projections 4 may be relatively long, for instance 30 cm, 50 cm or even more.

The frame 2 of the apparatus is substantially open on the first and the second sides 11 a, 11 b of the apparatus. The open frame refers here to the fact that the track 3 is accessible in the frame such that the track 3 is able to come into contact with material to be moved that comes from the side concerned of the apparatus.

The main directions of use U1 and U2 of the apparatus 1 are perpendicular to the plane passing through rotation axes C of the track rollers 5. The working width W1 of the apparatus is then at its largest. Because the apparatus 1 is open at both ends as well, it is also possible to use it in secondary running directions U3 and U4. In that case the working width of the apparatus is W2. Naturally, the apparatus 1 may also by used in directions between the main directions of use U1 and U2 and the secondary directions of use U3 and U4. It is still further possible to decline the first or the second edge 10a, 10b towards the working direction or the other way around.

The track 3 is preferably rotated by means of hydraulic transmission. In that case the apparatus 1 comprises a hydraulic motor known per se, which converts the pressure in the hydraulic fluid to a rotary motion of the track roller 5 and further of the track 3. The hydraulic motor of the apparatus 1 and other transmission components thereof are known per se, so they are not shown in the figures. Figure 1 shows only connectors 9, through which the hydraulic circuit of the apparatus 1 is connected to the hydraulic circuit of the work machine driving the apparatus. Alternatively, the track 3 may also be rotated by other means, such as an electric motor, compressed air or mechanical transmission gear.

Rotating speed of the hydraulic motor and consequently that of the track (3) is controllable preferably in a stepless manner from zero up to maximum speed. In addition, the running direction R of the track may be reversed, when necessary.

The apparatus 1 operates such that the track 3 is rotated in the running direction R, for instance. A work machine shifts the apparatus 1, for instance, in a first direction of use U1 towards material to be moved, for instance, towards a snowbank on the roadside. When the rotating track 3 encounters the snowbank, projections 4 penetrate in the snow and move it out of the way of the proceeding apparatus 1 - in the travel direction of the apparatus - in the running direction R. By controlling the rotating speed of the track 3 it is possible either to shift the snow quite close to the apparatus or to cast it up to tens of metres away from the apparatus 1. The blade device 7 detaches snow from the snowbank, which for its part facilitates snow removal - in particular, if the snow is hard or icy. In this manner the snowbank becomes lower. The track 3 may be rotated at high speed, for instance 100 km/h, so the snow will be cast very far away from the road. The position of the track 3 may be declined to a more appropriate position. It should be noted that even though in this exemplary case the material to be moved is snow or ice, it is obvious that the material to be moved may also be some other material, such as peat, mud, sand, grain, pellets, chips, chalk or the like. The projections 4 in the track, or at least some of them, may be designed such that, apart from moving material, they also crush the material to be moved. For instance, the crushing effect of the crushing projections may be based on their dented edges or the like.

Figure 2a shows schematically a blade device of the apparatus according to the invention seen from the front of the apparatus and Figure 2b shows a top view of a detail of the same blade device. The blade device 7 of the apparatus 1 is arranged to be movable in relation to the frame 2. The blade device 7 comprises a blade chain 12, which may be similar to those used in chain saws. The working width of the movable blade device 7 is substantially the same as the working width of the track 3. It should be noted that the projections in the track 3 are not shown in Figure 2a.

The blade chain 12 is arranged on two chain rollers 13 arranged with mutual spacing, the rotation axes C of the rollers being parallel with the rotation axes of the track 3. Naturally, in addition to the two chain rollers 13, the blade device 7 may also comprise more chain rollers, other wheels or guides which make sure that the blade chain 12 remains in place.

The blade chain 12 is preferably rotated by a hydraulic motor that is connected to the hydraulic system of the work machine that drives the apparatus 1. Said hydraulic motor may be the same as the motor that drives the track 3. The rotary motion of the blade chain 12 may also be generated by the roller set of the track 3 through mechanical transmission. In that case the blade chain 12 always runs in the same direction with respect to the track 3 - depending on the embodiment, either in the same direction with the track 3 or against the running direction of the track 3. The blade chain may, of course, receive its driving power from an electric motor, from compressed air, mechanically from an output axle of the work machine, etc.

In another embodiment, the direction and/or speed of rotation of the blade chain 12 may be selected independently of the track 3. In that case the apparatus 1 may be used, for instance, such that the track 3 rotates but the blade chain 12 does not, or vice versa.

Blades 14 in the blade chain 12 that runs in the direction of rotation R cut effectively even hard material, such as ice and the like. In the embodiment shown in Figures 2a, 2b the blades 14 are designed such that they cut effectively in only one direction of rotation, i.e. running direction R, but naturally it is also possible to employ a blade chain 12 whose blades cut equally well in both rotating directions of the chain.

The blade chain 12 is preferably lubricated with a lubricating agent when the blade chain 12 is in use.

Apart from chain, it is also possible to implement a moving blade device 7 by other solutions having a flexible frame part that may be configured to be an endless loop and to which flexible frame part it is possible to arrange blade parts. The flexible frame part may be a belt or a cable. Further, it is possible to implement the moving blade device 7 by arranging one or more rotatable blades in the blade device 7. Further still, it may be mentioned that the moving blade device 7 may be implemented by a blade moving in a reciprocating manner, which may resemble that of a mower.

The apparatus provided with the moving blade device 7 may be utilized, for instance, for cutting herbaceous plants, as well as tree shoots, on the roadsides. The material cut with the track 3 may be cast far away from the apparatus, if necessary.

Figure 3 shows schematically a part of the apparatus according to the invention seen from the front of the apparatus. The apparatus 1 is provided with a crushing device 15 that comprises a crusher part 16, which is cylindrical in its basic form and arranged on the opposite side of the blade device 7 in relation to the track 3. In relation to the frame of the apparatus the crusher part 16 is arranged to be rotatable about the axis of rotation C and on the outer surface thereof there are arranged projections that act as crushing elements. The type of the crusher part 16 may be a milling cutter known per se, or the like.

The crusher part 16 is able to detach and crush hard material, such as ice, into a form that allows removal with the track 3, for instance. The crusher part 16 is well suited for removing ice buildup from the roadway, or for making grooves through the snowbank for conducting melt waters from the roadway.

The crusher part 16 is detachably mounted on the apparatus, and therefore it is not necessary to mount it on the apparatus until needed, and it may be removed once the need is over. Preferably, the crushing device 15 is hydraulically driven and connected to the hydraulic system of the work machine.

For instance, the crushing device 15 may be implemented such that the drive shaft of the crusher part may be arranged detachably as an extension of the track roller axle of the track 3.

The crushing device 15 shown in Figure 3 is arranged at an end of the apparatus 1 and its working width is substantially smaller than the maximum working width W1 of the apparatus. In another embodiment, the working width of the crushing device 15 is substantially equal to the maximum working width W1 of the apparatus or even larger than that. The crushing device of this kind may comprise a plurality of juxtaposed, cylindrical crusher parts 16, for instance.

In the embodiment of Figure 3, the first edge 10a of the track 3 is configured to extend behind the blade device 7, whereby it is protected against impacts and other stresses affecting the edge.

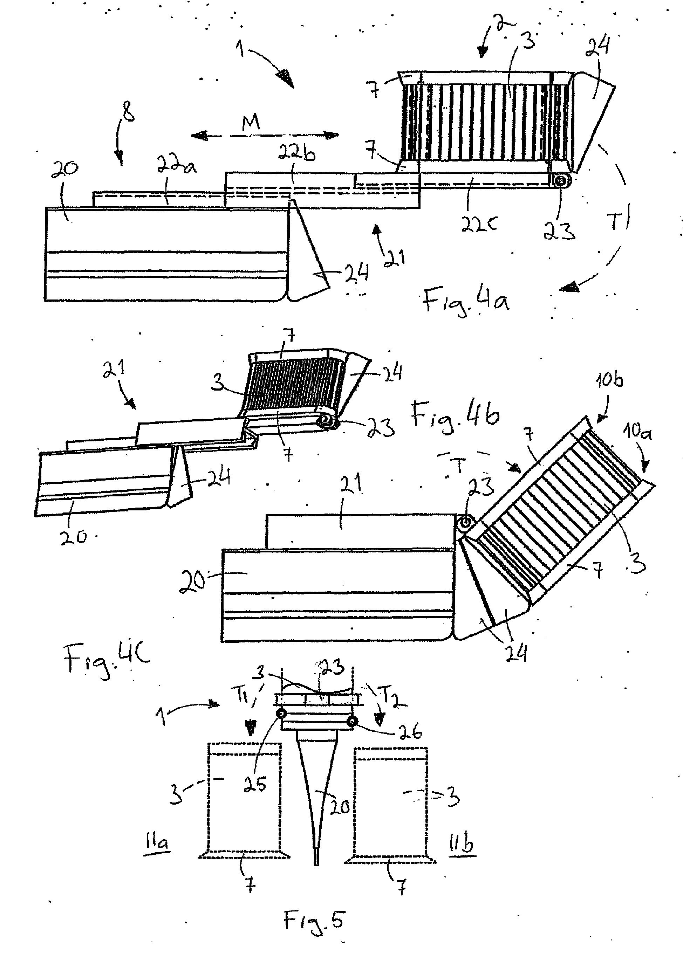

Figure 4a shows schematically a front view of an apparatus according to the invention arranged in a bulldozer blade. Figure 4b shows schematically a perspective view and Figure 4c a front view of the apparatus of Figure 4a. The apparatus 1 is mounted on the bulldozer blade, which in turn is mounted on a tractor or a similar work machine. Figures 4a to 4c show only part of a wing 20 of the bulldozer blade. By means of the apparatus 1 it is possible to move further material that the bulldozer blade brings within its reach.

The apparatus 1 is mounted on the bulldozer blade wing 20 with a linear guide bar 21, which comprises three guide parts 22a, 22b, 22c that are mutually movable in the longitudinal direction. The first guide part 22a is preferably mounted detachably onto the bulldozer blade wing 20 with securing means 8. The length of the guide bar 21 is adjustable as indicated by arrow M such that the distance of the apparatus 1 from the wing is adjustable in the longitudinal direction of the wing 20. The longitudinal adjustment is preferably carried out by means of a hydraulic actuator, but electrical, pneumatic or mechanical longitudinal adjustment is also possible.

The track 3 and the blade devices 7 are secured with first hinge elements 23 to the end of a third guide part 22c. The rotation axis of the first hinge elements 23 is perpendicular to the longitudinal direction of the guide bar 21. The track 3 and the blade devices 7 are turnable, in the manner indicated by arrow T, supported by the hinge elements 23 from the top of the guide bar 21 to be therebelow, and vice versa. The track 3 and the blade devices 7 may also be turned at a desired angle to the wing 20. For instance, in Figure 4c the track 3 and the blade devices 7 are at an angle of about 45 degrees to the wing 20. Turning is preferably carried out by means of a hydraulic actuator.

The apparatus 1 comprises two intermediate flanges 24, by means of which the area between the track 3 and the wing end 20 may be covered such that movable material from the direction of the wing 20 moves further to the track 3.

The track 3 casts the material to be moved to a distance which depends on the rotating speed of the track 3. The casting angle being 45 degrees, the material is cast to said distance with the lowest possible energy.

The apparatus 1 comprises a blade device 7 in the vicinity of both the first edge 10a and the second edge 10b of the track 3. In addition, both blade devices 7 run around the apparatus. Thanks to two blade devices, the apparatus 1 may detach material to be moved with both edges at different times or simultaneously.

Figure 5 shows a schematic end view of an apparatus according to the invention mounted on the bulldozer blade. The apparatus 1 is mounted on the bulldozer blade wing 20. The bulldozer blade is preferably of the type disclosed in Finnish patent No. 111 406, but the bulldozer blade may be of some other type as well. The design of the bulldozer blade wing 20 makes it possible to push material both on the first side 11a and the second side 11b of the wing 20.

The mounting of the apparatus 1 onto the bulldozer blade is implemented by means of three hinge elements in total. The first hinge elements 23 are secured to the frame 2 of the apparatus and they are substantially similar to the first hinge elements 23 shown in Figures 4a to 4c. The first hinge elements 23 are connected to the second hinge elements 25. The rotation axis of the second hinge elements 25 is substantially parallel with the longitudinal direction of the wing 20. By turning the second hinge elements 25 the apparatus 1 is turnable from the top of the wing 20 downwardly to be in front of the wing, on the first side 11a thereof, which is indicated by arrow T1. The second hinge elements 25 are connected to the third hinge elements 26 whose rotation axes are also substantially parallel with the longitudinal direction of the wing 20. By turning the third hinge elements 26 the apparatus 1 is turnable from the top of the wing 20 downwardly to be in front of the wing, on the second side 11 b thereof. The apparatus 1 may thus be employed for moving material both in the first direction 11a and in the second direction 11b.

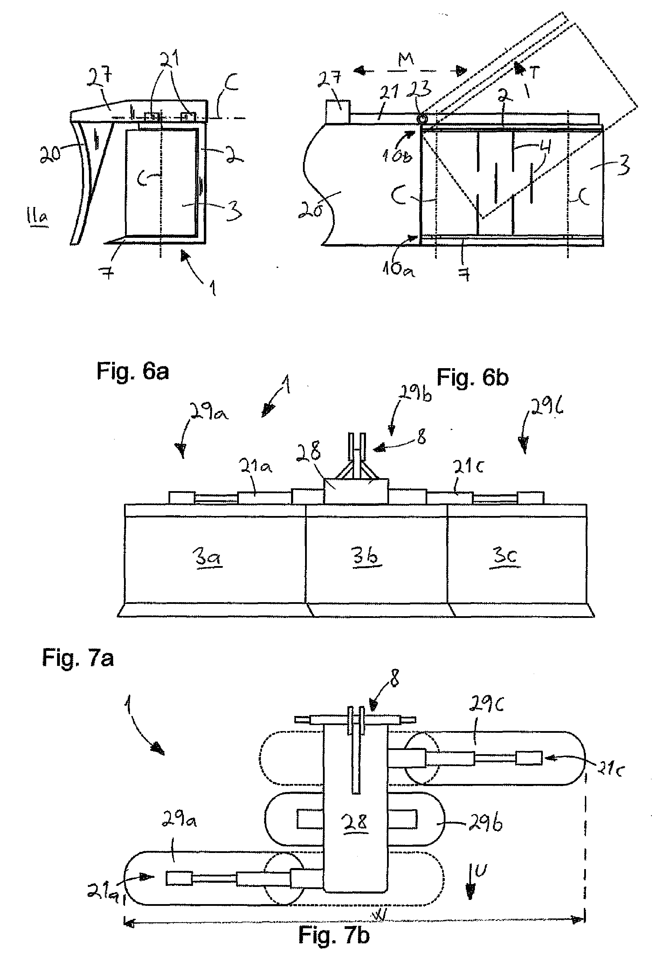

Figure 6a shows a schematic end view and Figure 6b a schematic front view of an apparatus according to the invention arranged on the second side of the bulldozer blade.

The apparatus 1 is mounted on the bulldozer blade. The bulldozer blade wing 20 is designed such that the bulldozer blade is to be used only on the first side 11a. The apparatus 1 is mounted on the bulldozer blade wing 20 with a mounting bar 27. In the frame 2 of the apparatus 1 there are arranged two linear guide bars 21 which are able to move in their longitudinal direction in relation to the mounting bar 27. The guide bars 21 may be moved in the longitudinal direction of the wing 20 in relation to the mounting bar 27 such that the apparatus 1 may be moved, supported thereby, from behind the wing 20 over the wing end to form a kind of wing extension, and vice versa, which move is indicated by arrow M.

The guide bars include first hinge elements 23, thanks to which the apparatus 1 may be turned about a horizontal swivelling axis C as indicated by arrow T.

The frame 2 of the apparatus 1 is open only towards the intended direction of use of the bulldozer blade, while substantially closed on the other side.

The projections 4 in the track 3 are ribs that are substantially shorter than the distance between the edges 10a, 10b of the track. The ribs are arranged in an alternating manner such that they move material substantially for the whole extent between the track edges. It should be noted that, for the sake of clarity, ribs are only shown in part of the track 3.

Figure 7a shows a schematic front view of an apparatus according to the invention and Figure 7b shows a top view of the apparatus of Figure 7a. The apparatus 1 comprises three track units 29a, 29b, 29c arranged in a mutually staggered manner in the main direction of use U. Each track unit comprises one track 3a, 3b, 3c. The working width of the apparatus 1 is larger than that of an individual track 3a, 3b, 3c, but smaller than the sum of the working widths of individual tracks 3.

The first and the third track units 29a and 29c are arranged movably by means of linear guide bars 21a and 21c such that the working width W of the apparatus may be altered - preferably steplessly. In Figures 7a, 7b the apparatus 1 and the tracks are arranged such that the working width W of the apparatus is at its largest. Additionally, in Figure 7a the location of the tracks is shown in broken lines, when the working width W of the apparatus is at its smallest. The second track unit 29b is mounted on the main frame 28 of the apparatus without range adjustment.

The linear guide bars 21a, 21c are connected to the main frame 28. In addition, the main frame 28 is provided with mounting means 8, which are arranged such that the apparatus 1 may be mounted on a lifting device of a tractor or a similar work machine. Naturally the mounting means 8 may be provided in view of some other manner to mount the apparatus 1 on the work machine.

Instead of the linear guide bars 21a, 21c it is possible to use articulated arms or other similar machine elements known per se, by which the distance of the track units 29a, 29b and 29c may be varied from the main frame 28. Further, the track units 29a, 29b and 29c may be mounted such that their mutual height positions may be varied. Likewise, the track units 29a, 29b and 29c may be mounted such that they may be turned about a swivelling axis that is parallel with the direction of use U either independently of or together with other tracks. The latter feature may be implemented, for instance, by arranging between the mounting means 8 and the main frame 28 a swivel about which the main frame may be turned in relation to the mounting means 8.

The same apparatus may include two or four or more track units. The main frame 28 may also be mounted on the outermost track unit without range adjustment while the other track units are mounted by means of linear guide bars or the like.

The drawings and the relating description are only intended to illustrate the inventive idea. The details of the invention may vary within the scope of the claims. So, the control of the operations of the apparatus is preferably implemented by remote control, i.e. the operator of the work machine may adjust the position of the apparatus, the rotating speed and direction of the track and the like from the cab of the work machine driving the apparatus, or outside the cab. Automatic control of the apparatus is also possible: the apparatus may include a control unit, or the apparatus may be connected to such a control unit, that controls automatically the operation of the apparatus on the basis of information received from outside.

## Claims

1. An apparatus for moving material, the apparatus (1) comprising a frame (2) and a blade device (7) secured to the frame, **characterized in that** the apparatus also comprises a track (3) which is configured to be an endless loop and which is configured to make rotary motion in relation to the frame (2), carried by support elements mounted on the frame, that the rotation axis (C) of the track's (3) rotary motion is configured to be perpendicular to the longitudinal axis (L) of the blade device (7) and to the main direction of use (U) of the apparatus (1) and that one edge of the track (3) is configured in the vicinity of the blade device (7) and that on the outer surface of the track (3) there are arranged projections.

2. The apparatus of claim 1, **characterized in that** the support elements comprise two track rollers (5) which are arranged with a mutual spacing.

3. The apparatus of claim 1 or 2, **characterized by** comprising at least two tracks (3) mutually arranged such that the working width (W) of the apparatus is larger than the working width of an individual track (3).

4. The apparatus of claim 3, **characterized in that** the tracks (3) are configured to partially overlap one another such that the working width (W) of the apparatus is larger than the working width of an individual track (3) but smaller than the sum of the working widths of individual tracks (3).

5. The apparatus of any one of the preceding claims, **characterized in that** the projections (4) are ribs that extend substantially from the first edge (10a) to the second edge (10b) of the track (3).

6. The apparatus of any one of claims 1 to 4, **characterized in that** the projections (4) are ribs which are substantially shorter than the extent between the edges (10a, 10b) of the track and which are configured such that the ribs move material substantially for the whole extent between the edges (10a, 10b) of the track.

7. The apparatus of any one of the preceding claims, **characterized in that** the apparatus (1) comprises two blade devices (7), one in the vicinity of each edge (10a, 10b) of the track.

8. The apparatus of any one of the preceding claims, **characterized in that** the apparatus (1) comprises a blade device (7) both on the first side and the second side (11 a, 11 b) of the apparatus (1).

9. The apparatus of claim 8, **characterized in that** the blade device (7) is on the first side (11 a) of the apparatus and extends over the end of the apparatus thus forming a blade device also on the second side (11 b) of the apparatus.

10. The apparatus of any one of the preceding claims, **characterized in that** the edge (10a, 10b) of the track is configured to extend behind the blade device (7),

11. The apparatus of any one of the preceding claims, **characterized in that** the blade device (7) is configured to move in relation to the frame (2).

12. The apparatus of claim 11, **characterized in that** the blade device (7) comprises a flexible frame part that is configured to form an endless loop and which frame part is configured to make rotary motion carried by support elements arranged in the frame (2) and which flexible frame part is provided with blade parts.

13. The apparatus of claim 12, **characterized in that** the flexible frame part is a blade chain (12).

14. The apparatus of claim 12, **characterized in that** the flexible frame part is a belt.

15. The apparatus of any one of claims 11 to 14, **characterized in that** the force moving the blade device is arranged for being received from the power transmission gear of the track.

16. The apparatus of any one of claims 11 to 15, **characterized in that** the direction of motion of the blade device is arranged reversible.

17. The apparatus of any one of the preceding claims, **characterized in that** the apparatus comprises a crushing device (15) that includes a crusher part (16) that is arranged to rotate in relation to the frame (2) and on the outer surface of the crusher part there are arranged crushing elements.

18. The apparatus of claim 17, **characterized in that** the crusher part (16) is mounted detachably on the apparatus (1).

19. The apparatus of claim 17 or 18, **characterized in that** the working width of the crushing device (15) is substantially smaller than the working width (W) of the apparatus and that it is arranged at the end of the apparatus (1) on the opposite side of the blade device (7) with respect to the track (3).

20. The apparatus of any one of the preceding claims, **characterized in that** the frame (2) is substantially open on the first and the second sides (11a, 11 b) of the apparatus (1).

21. The apparatus of any one of the preceding claims, **characterized in that** the apparatus (1) comprises mounting means (8) for mounting the apparatus detachably to a work machine.

22. The apparatus of claim 21, **characterized in that** the apparatus (1) is mounted on the work machine such that their mutual positions are adjustable.

23. The apparatus of claim 21 or 22, **characterized in that** the mounting means (8) may be arranged in the lifting devices of the work machine.

24. The apparatus of claim 21 or 22, **characterized in that** the mounting means (8) may be arranged in an arm of the work machine.

25. The apparatus of claim 21 or 22, **characterized in that** the work machine is a bulldozer blade and material moved thereby is to be further moved by the apparatus.

26. The apparatus of claim 25, **characterized in that** the apparatus (1) is pivotably mounted on the bulldozer blade with first hinge elements (23) and that the swing axis of the first hinge elements (23) is substantially perpendicular to the longitudinal direction of the bulldozer blade wing (20).

27. The apparatus of claim 25 or 26, **characterized in that** the apparatus (1) is mounted on the bulldozer blade with a linear guide bar (21) whose length is adjustable such that the distance of the apparatus (1) from the wing (20) may be changed in the longitudinal direction of the wing (20).

28. The apparatus of claim 27, **characterized in that** the linear guide bar (21) is mounted on the bulldozer blade wing (20).

29. The apparatus of any one of claims 25 to 28, **characterized in that** the apparatus (1) is pivotably mounted on the bulldozer blade with second hinge elements (25) whose swing axis is substantially parallel with the longitudinal direction of the bulldozer blade wing (20) and that the apparatus (1) is turnable in front of the wing (20) on the first side (11a).

30. The apparatus of claim 29, **characterized in that** between the bulldozer blade and the second hinge elements (25) there are arranged third hinge elements (26) whose swing axis is substantially parallel with the longitudinal direction of the wing (20) and that the apparatus (1) is turnable from the top of wing downwardly in front of the wing (20) both on the first side (11 a) and the second side (11b) thereof.

31. The apparatus of claim 27, **characterized in that** the apparatus (1) is mounted behind the wing (20) wherefrom it may be taken out over the wing end.

32. The apparatus of any one of the preceding claims, **characterized in that** the track (3) is configured for being hydraulically rotated.

33. The apparatus of any one of the preceding claims, **characterized in that** the rotating speed of the track (3) is steplessly controllable.

34. The apparatus of any one of the preceding claims, **characterized in that** the running direction (R) of the track (3) is reversible.
